# EUROPEAN PATENT APPLICATION

(11) **EP 4 668 846 A1**
(43) Date of publication of application: **24.12.2025**
(21) Application number: 23921909.0
(22) Date of filing: 16.02.2023
(51) Int. Cl.: H04W 28/06

(54) **DATA PACKET DISCARDING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); WU, Yumin, Beijing 100085 (CN)
(74) Representative: Stöckeler, Ferdinand
(86) International application number: PCT/CN2023/076613
(87) International publication number: WO 2024/168755

(57) **Abstract**

The present application relates to the field of mobile communications, and discloses a data packet discarding method and apparatus, a device, and a storage medium. The method comprises: a terminal discards, on the basis of the priorities of data packets, a data packet corresponding to a target priority. The present application provides a solution of discarding data packets on the basis of the priorities of data packets, thereby ensuring that data packets having low importance are discarded preferentially and data packets having high importance are transmitted preferentially, and ensuring the communication reliability of terminals.

## Description

### TECHNICAL FIELD

The present disclosure relates to the field of mobile communications, and particularly to a method for discarding a data packet, an apparatus for discarding a data packet, a device and a storage medium.

### BACKGROUND

**In** mobile communication systems, in a case of a terminal determining that a timer expires or receiving a discard instruction indicated by a network device, the terminal discards a data packet. However, the above method for discarding the data packet has limitations and a new method for discarding the data packet is urgently needed.

### SUMMARY

Embodiments of the present disclosure provide a method for discarding a data packet, an apparatus for discarding a data packet, a device, and a storage medium, which ensures that a data packet with low importance is preferentially discarded and a data packet with high importance is preferentially transmitted, thereby ensuring the reliability of communication for a terminal. The technical solution will be described as follows.

According to an aspect of the present disclosure, a method for discarding a data packet is provided. The method is performed by a terminal and includes:
discarding a data packet corresponding to a target priority based on priorities of one or more data packets.

According to another aspect of the present disclosure, an apparatus for discarding a data packet is provided. The apparatus includes:
a processing module, configured to discard a data packet corresponding to a target priority based on priorities of one or more data packets.

According to another aspect of the present disclosure, a terminal is provided. The terminal includes: a processor, a transceiver connected to the processor, and a memory for storing instructions executable by the processor; in which the processor is configured to load and execute the executable instructions to implement the method for discarding a data packet as described above.

According to another aspect of the present disclosure, a communication system is provided. The communication system includes a terminal and a network device, in which the terminal is configured to implement the method for discarding a data packet as described above and the network device is configured to implement the method for discarding a data packet.

According to another aspect of the present disclosure, a computer-readable storage medium is provided, in which an executable program code is stored on the computer-readable storage medium, and when the executable program code is loaded and executed by a processor, the method for discarding a data packet as described above is implemented.

According to another aspect of the present disclosure, a chip is provided. The chip includes a programmable logic circuit and/or a program instruction. When the chip is running on a terminal, the method for discarding a data packet as described above is implemented.

According to another aspect of the present disclosure, a computer program product is provided. When the computer program product is executed by a processor of a terminal, the method for discarding data packet as described above is implemented.

The present disclosure provides a technical solution for discarding one or more data packets based on their priorities, which ensures that a data packet with low importance is preferentially discarded and a data packet with high importance is preferentially transmitted, thereby ensuring the reliability of communication for the terminal.

### BRIEF DESCRIPTION OF THE DRAWINGS

To more clearly illustrate technical solutions in embodiments of the present disclosure, a brief introduction to accompanying drawings needed in description of the embodiments will be provided below. It is obvious that the accompanying drawings described below are only some embodiments of the present disclosure. For those skilled in the art, without making any creative efforts, other accompanying drawings may be obtained based on the drawings.
FIG. 1 illustrates a structural block diagram of a communication protocol layer provided in an embodiment of the present disclosure;
FIG. 2 illustrates a schematic diagram of data packet transmission in a communication protocol layer provided in an embodiment of the present disclosure;
FIG. 3 illustrates a block diagram of a communication system provided in an embodiment of the present disclosure;
FIG. 4 illustrates a flowchart of a method for discarding a data packet provided in an embodiment of the present disclosure;
FIG. 5 illustrates a block diagram of an apparatus for discarding a data packet provided in an embodiment of the present disclosure;
FIG. 6 illustrates a block diagram of an apparatus for discarding a data packet provided in an embodiment of the present disclosure;
FIG. 7 illustrates a structural diagram of a communication device provided in an embodiment of the present disclosure.

### DETAILED DESCRIPTION

**In** order to make purpose, technical solutions and advantages of the present disclosure clearer, the following will further describe the implementation of the present disclosure in conjunction with the drawings.

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure. Instead, they are merely examples of apparatuses and methods consistent with aspects related to the present disclosure as recited in the appended claims.

The terms used in the embodiment of the present disclosure are merely for the purpose of describing a particular embodiment and are not intended to limit the embodiment of the present disclosure. The terms "a" and "the" in the singular form as used in the embodiments of the present disclosure and the accompanying claims are also intended to include the majority form, unless the context clearly indicates otherwise. It should also be understood that the term "and/or" as used herein refers to and encompasses any or all possible combinations of one or more associated listed items.

It is understood that although the terms first, second, third, etc. may be used to describe various information in the embodiments of the present disclosure, such information should not be limited to these terms. These terms are used only to distinguish the same type of information from one to another. For example, without leaving the scope of the present disclosure, the first information may also be referred to as the second information, and similarly, the second information may also be referred to as the first information. Depending on the context, the words "if" used here can be interpreted as "when" or "in response to determining".

It should be noted that information (including but not limited to user equipment information, user personal information, etc.), data (including but not limited to data used for analysis, data stored, data displayed, etc.) and a signal involved in the present disclosure have all been authorized by a user or have been fully authorized by all parties. Moreover, collection, use and processing of relevant data must comply with relevant laws, regulations and standards of countries and regions.

First of all, the terms involved in the present disclosure will be explained.

Packet data convergence protocol (PDCP) layer: the PDCP layer is used to implement internet protocol (IP) header compression. The PDCP layer is used to implement the IP header compression to reduce the number of bits transmitted over a wireless interface, as well as implement encryption and integrity protection. Additionally, during handovers, the PDCP layer also handles a retransmission, in-order delivery, and duplicate data deletion. During handovers, the PDCP forwards any undelivered downlink data packets from an old gNB to a new gNB. During handovers, since hybrid automatic repeat request (HARQ) cache is cleared, the PDCP layer in the terminal will also be responsible for retransmitting all uplink data packets that have not yet arrived at the gNB. In this case, some protocol data units (PDUs) may be received repeatedly, through both the old gNB connection and the new gNB connection. In such cases, the PDCP will delete a duplicate received data packet.

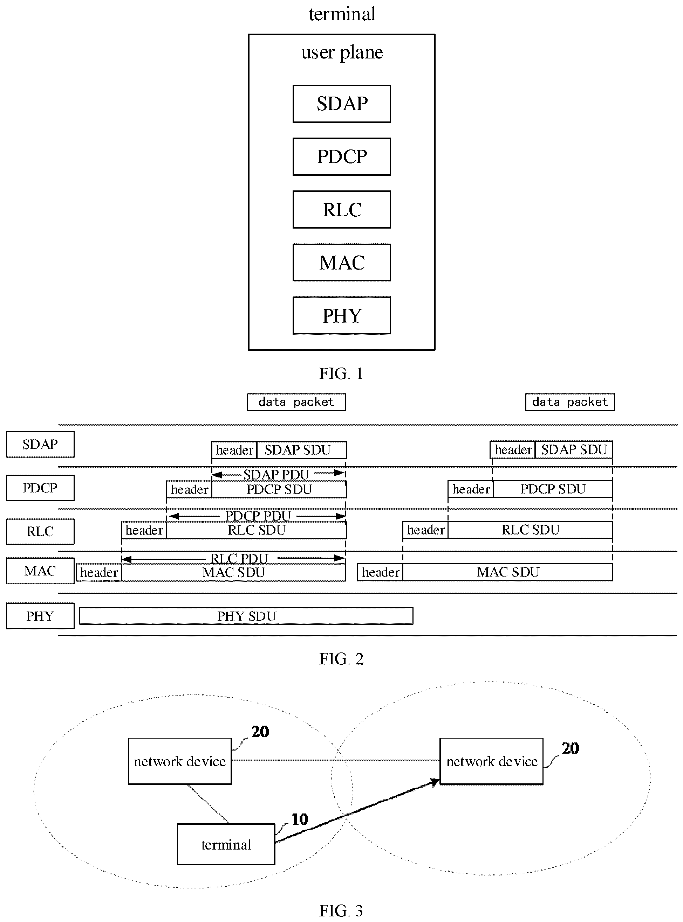

The PDCP layer belongs to a wireless protocol architecture. In some embodiments, the wireless protocol architecture includes a user plane protocol and a control plane protocol. Next, a wireless protocol architecture of the user plane protocol will be explained. Refer to FIG. 1, the wireless protocol architecture of the user plane protocol includes a service data adaption protocol (SDAP) layer, a PDCP layer, a radio link control (RLC) layer, a media access control (MAC) layer, and a physics layer (PHY) layer; and the SDAP layer, the PDCP layer, the RLC layer, the MAC layer, and the PHY layer are connected in sequence.

The SDAP layer is responsible for mapping a quality of service (QoS) bearer to a wireless bearer based on a QoS requirement. Moreover, the SDAP layer marks a QoS flow identifier for data packets in the uplink and data packets in downlink.

The RLC layer divides an RLC service data unit (RLC SDU) from the PDCP layer into RLC PDUs. The RLC layer also needs to retransmit an incorrectly received PDU and remove a duplicate PDU.

The MAC layer is responsible for logical channel multiplexing, HARQ retransmission, scheduling, and a scheduling related function, including processing different parameter sets. In a case of using carrier aggregation, the MAC layer is also responsible for data multiplexing and demultiplexing across multiple component carriers.

The PHY layer is responsible for encoding, physical layer HARQ processing, modulation, multi-antenna processing, and mapping a signal onto a corresponding physical time-frequency resource. The PHY layer is also responsible for mapping a transmission channel to a physical channel.

Next, data packets transmitted by each layer in the user plane protocol will be explained. Refer to FIG. 2, a transmission process of the data packets will be described as follows.

The terminal receives a data packet, processes an IP packet through an SDAP layer to obtain an SDAP SDU, then adds a header to the SDAP SDU to obtain an SDAP PDU. The SDAP layer sends the SDAP PDU to a PDCP layer. The PDCP layer receives the SDAP PDU, which is also a PDCP SDU. The PDCP layer adds a header to the PDCP SDU to obtain a PDCP PDU. The PDCP layer sends the PDCP PDU to an RLC layer. The RLC layer receives the PDCP PDU, which is also an RLC SDU. The RLC layer adds a header to the RLC SDU to obtain an RLC PDU. The RLC layer sends the RLC PDU to a MAC layer. The MAC layer receives the RLC PDU, which is also a MAC SDU. The MAC layer adds a header to the MAC SDU to obtain a MAC PDU. The MAC layer sends the MAC PDU to a PHY layer. The PHY layer groups the MAC PDU to obtain PHY SDUs.

Secondly, an application scenario of the present disclosure will be explained.

FIG. 3 illustrates a block diagram of a communication system provided in an embodiment of the present disclosure. The communication system may include: a terminal 10 and a network device 20.

The number of terminals 10 is usually multiple. There may be one or more terminals 10 distributed within each cell managed by the network device 20. The terminal 10 may include various handheld devices, vehicle-mounted devices, wearable devices, computing devices or other processing devices connected to a wireless modem, all of which have wireless communication capabilities; as well as various forms of a user equipment (UE), a mobile station (MS), and so on. For convenience of description, in the embodiments of the present disclosure, the aforementioned devices are collectively referred to as the terminal.

The network device 20 is an apparatus deployed in an access network to provide a wireless communication function for the terminal 10. For ease of description, in the embodiments of the present disclosure, apparatuses that provide wireless communication functions for the terminal 10 are collectively referred to as the network device. The network device 20 may establish a connection with the terminal 10 through an air interface, thereby enabling communication through the connection, including signaling and data interaction. The number of network devices 20 may be multiple, and two adjacent network devices 20 may also communicate through wired or wireless means. The terminal 10 may send beam reports to different network devices 20, that is, establish connections with different network devices 20.

The network device 20 may include various forms of macro base stations, micro base stations, relay stations, access points, etc. In systems that employ different wireless access technologies, the names of devices with network device functionality may vary. For example, in a 5G new radio (NR) system, the network device is called gNodeB or gNB. As communication technologies evolve, the name "network device" may change.

In the embodiments of the present disclosure, a "5G NR system" may also be referred to as a 5G system or an NR system, but the technical meaning may be understood by those skilled in the art. Technical solutions described in the embodiments of the present disclosure may be applied to the 5G NR system, and also to the subsequent evolved systems of the 5G NR system.

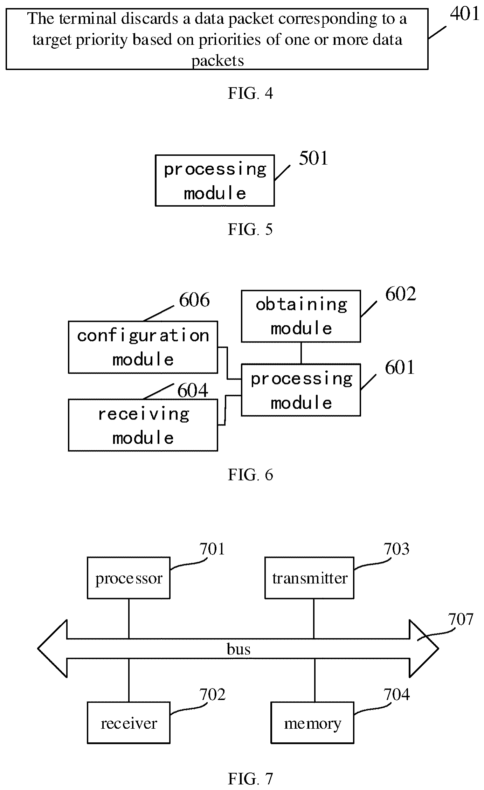

FIG. 4 illustrates a flowchart of a method for discarding a data packet provided in an embodiment of the present disclosure. This embodiment may be applied to the terminal as shown in FIG. 3. The method includes at least some of the following contents.

Step 401: the terminal discards a data packet corresponding to a target priority based on priorities of one or more data packets.

The priorities may be understood as a dimension of importance of data packets or orders of classification attributes of data packets. Specifically, the priority may be sorted based on importance of data (such as different packet set importance), type of service (such as I-frame, P-frame, video stream, audio stream, etc.), a Qos flow ID or a sub Qos flow ID, or other dimensions.

In some embodiments, the higher the priority of one data packet, the greater the importance of that data packet. It may also be understood that the priority of one data packet is positively proportional to its importance. The target priority refers to the priority of the data packet that the terminal needs to discard. It may also be understood that the target priority is one of the priorities among the data packets.

In some embodiments, the data packets belong to a data packet set, and the data packet set includes at least one data packet. Optionally, the priorities of the data packets included in a data packet set are the same. For example, in a case that the priority of the data packet set is 1, then the priority of the at least one data packet included in the data packet set is 1.

Optionally, in the embodiments of the present disclosure, a value of the priority is inversely proportional to the priority of the data packet. It may also be understood that the lower the value of the data packet's priority, the higher the priority of the data packet; and the higher the value of the data packet's priority, the lower the priority of the data packet.

In some embodiments of the present disclosure, the data packet is a PDCP data packet. Optionally, the data packet is a PDU data packet within a PDCP data packet, or an SDU data packet within a PDCP data packet. In some embodiments, the terminal discards the PDCP data packet through a PDCP layer.

Next, the source of the PDCP data packet will be explained. Refer to FIG. 1 or FIG. 2, the PDCP layer is located between an SDAP layer and an RLC layer. It may also be understood that the data packet of the PDCP layer is exchanged between the PDCP layer and the SDAP layer or the RLC layer through interaction.

Optionally, the source of the PDCP data packet is the SDAP layer. The SDAP layer sends an SDAP PDU to the PDCP layer. After the PDCP layer receives the SDAP PDU sent by the SDAP layer, the PDCP layer obtains a PDCP SDU. That is to say, the PDCP SDU is the same as the SDAP PDU. Optionally, the PDCP layer adds a header to the PDCP SDU to obtain a PDCP PDU.

Optionally, the source of the PDCP data packet is the RLC layer. The RLC layer sends an RLC SDU to the PDCP layer. After the PDCP layer receives the RLC SDU sent by the RLC layer, the PDCP layer obtains a PDCP PDU. That is to say, the RLC SDU is the same as the PDCP PDU. Optionally, the PDCP layer removes a header from the PDCP PDU to obtain a PDCP SDU.

The SDU data packet refers to a data packet that enters each sub-layer and has not been processed. The PDU data packet refers to the data packet that has been processed by the sub-layer and has been formed into a specific format. Alternatively, it may be understood that the original data of the SDU is the PDU at an upper layer of a protocol.

For example, the sub-layer refers to any one of the SDAP layer, the PDCP layer, the RLC layer, the MAC layer or the PHY layer in the embodiments as shown in FIG. 1 or FIG.2.

In some embodiments, the terminal discards the data packet corresponding to the target priority through the PDCP layer involved in the above embodiments. That is to say, the terminal discards the PDCP SDU or discards the PDCP PDU through the PDCP layer.

In some embodiments, discarding data packets may include discarding a plurality of associated data packets. For example, a plurality of data packets belonging to one data packet set are discarded.

It should be noted that in the embodiments of the present disclosure, the priority of the data packet is taken as an example for explanation. In another embodiment, the priority of the data packet is indicated by a priority identifier. Optionally, the priority identifier may be a priority identifier of the data packet set. For example, the priority identifier of the data packet set may be PDU set importance.

**In** some embodiments, the data packet set also has other parameters in addition to the priority identifier. For example, the other parameters include at least one of a sequence number of the data packet set, a starting data packet of the data packet set, an ending data packet of the data packet set, the number of data packets included in the data packet set, or a data packet sequence number included in the data packet set.

It should be noted that the data packets in the embodiments of the present disclosure may be those in an extended reality (XR) service scenario. In the XR service scenario, the data packets include two types, and the priorities of data packets with different types are also different.

In some embodiments, the XR service involves multi-modal data streams. Multi-modal data refers to data that is input from the same device or different devices (including sensors) and that is used for describing the same service /application. The data may be output to one or more destination device terminals. Each data stream in the multi-modal data in most cases has certain or even strong correlations, such as synchronization of audio and video streams, synchronization of tactile and visual sensations, etc. The data stream of such media service, various data streams, and the requirements of the service data streams for network transmission all have some common characteristics. The effective identification and utilization of these characteristics will be more conducive to transmission and control of the network and the service, as well as to guarantee of the service and the user experience.

In some embodiments, the data packet in the XR service scenario includes an I-frame data packet and a P-frame data packet. The importance of the I-frame data packet is higher than the importance of the P-frame data packet. Optionally, the terminal may decode the I-frame data packet separately, which may be understood that the terminal needs to use the I-frame for decoding, while the P-frame cannot be decoded separately.

The present disclosure provides a technical solution for discarding one or more data packets based on their priorities, which ensures a data packet with low importance is preferentially discarded and a data packet with high importance is preferentially transmitted, thereby ensuring the reliability of communication for the terminal.

In one possible implementation, the terminal executes a process of discarding a data packet based on priorities of one or more data packets in a case of determining that a certain condition is met. The following explains how the terminal performs the process under some circumstances.

In some embodiments, in a case that the terminal determines that a network is in a congestion state, the data packet corresponding to the target priority is discarded based on the priorities of the one or more data packets.

The congestion state refers to a situation where the amount of data transmitted over the network is small and a transmission requirement cannot be met. In embodiments of the present disclosure, in a case that the terminal determines that the network is in a congestion state, it indicates that current network state cannot meet transmission of data packets, and thus some data packets need to be discarded. Therefore, the terminal discards the data packet corresponding to the target priority based on priorities of one or more data packets.

In some embodiments, the target priority is a preset priority. The preset priority is agreed upon by a communication protocol, or configured by a network device, or configured by other means, which is not limited in the embodiments of the present disclosure.

In embodiments of the present disclosure, in a case that the terminal detects network congestion, the terminal discards a data packet with a preset priority. Alternatively, it may be understood that in a case that the terminal detects network congestion, the terminal discards a data packet of a specific type.

For example, in a case that the data packets include an I-frame data packet and a P-frame data packet, the priority of a data packet belonging to the I-frame data packet type is 1, the priority of a data packet belonging to the P-frame data packet type is 2, the terminal discards the data packet with a priority of 2 when it detects network congestion. It may also be understood that the terminal discards the data packet belonging to the P-frame data packet type when it detects network congestion.

In some embodiments, the target priority is the lowest priority among all priorities of the data packets.

In embodiments of the present disclosure, in a case that the terminal detects network congestion, it needs to discard the data packet. For a plurality of data packets in the terminal, the data packet with a lower priority may be discarded preferentially to ensure that a data packet with a higher priority is transmitted preferentially. Optionally, the priority of a data packet is used to indicate importance of the data packet. That is to say, the terminal may discard a data packet with lower importance preferentially to ensure that a data packet with higher importance is transmitted preferentially.

Optionally, in a case that the terminal detects the network congestion, the terminal sorts the data packets in a descending order of priorities. The terminal discards the sorted data packet in sequence until the remaining data packets can be transmitted over the network.

In the solution provided in embodiments of the present disclosure, in a case that the terminal determines the network congestion, the terminal discards a fixed-priority data packet or a data packet with a lower priority, and transmits the data packet with high importance, thereby ensuring the reliability of communication for the terminal.

It should be noted that this embodiment of the present disclosure is explained based on the scenario where the terminal detects the network congestion. The following explains how the terminal determines the network congestion.

In some embodiments, the terminal obtains a measurement result of a packet data convergence protocol (PDCP) layer. In a case of determining that the measurement result of the PDCP layer reaches a predetermined measurement result, the terminal determines that the network is in the congestion state.

The predetermined measurement result is agreed upon by a communication protocol, or configured by a network device, or configured by other means, which is not limited in the embodiments of the present disclosure.

In the embodiments of the present disclosure, the terminal may perform PDCP layer measurement on the transmitted data packet to obtain the measurement result of the PDCP layer. By comparing the obtained measurement result with the predetermined measurement result, the terminal may determine whether the network is in the congestion state.

Optionally, the measurement result of the PDCP layer obtained by the terminal is measured based on at least one data packet from each data packet set. It may also be understood that when the terminal performs PDCP layer measurement, the terminal will measure at least one data packet from one data packet set, thereby obtaining the measurement result of the PDCP layer corresponding to the data packet set. The data packet set includes the at least one data packet. That is to say, in a case that the terminal performs the PDCP layer measurement, the terminal performs the PDCP layer measurement on the at least one data packet included in the data packet set to obtain the measurement result of the PDCP layer.

It should be noted that the above embodiments of the present disclosure is explained in a case that the measurement result of the PDCP layer is measured based on at least one data packet from each data packet set. In another embodiment, the measurement result of the PDCP layer is measured based on at least one data packet of each data packet set attribute. That is to say, the terminal performs PDCP layer measurement on data packets with the same attributes. Optionally, the terminal determines data packet sets with the same attributes, performs PDCP layer measurement on the data packets included in the data packet sets with the same attributes, and obtains the measurement result of the PDCP layer.

The attribute refers to a priority of the data packet set. It may also be understood that, in a case that the priorities of the data packet sets are the same, it indicates that the attributes of the data packet sets are the same; while in a case that the priorities of the data packet sets are different, it indicates that the attributes of the data packet sets are different.

Optionally, the measurement result of the PDCP layer obtained by the terminal is measured based on at least one data packet of each data radio bearer (DRB), in which each DRB includes at least one data packet set. It may also be understood as follows: in a case that the terminal performs the PDCP layer measurement, the terminal will measure a data packet within a data packet set of the DRB, thereby obtaining the measurement result of the PDCP layer for the DRB. The DRB includes at least one data packet set, and each data packet set includes at least one data packet. That is to say, in a case that the terminal performs the PDCP layer measurement, the terminal will perform the PDCP layer measurement on at least one data packet from the at least one data packet set included in the DRB to obtain the measurement result of the PDCP layer.

In some embodiments, in a case that a queuing delay of data packet transmission reaches a preset duration, it is determined that the measurement result of the PDCP layer reaches the predetermined measurement result.

The preset duration is agreed upon by a communication protocol, or configured by a network device, or configured by other means, which is not limited in the embodiments of the present disclosure.

Optionally, the queuing delay of data packet transmission refers to a duration from when a data packet arrives at an upper layer of the PDCP (SDAP) in the terminal to when the uplink grant for transmission of the data packet is available. It should be noted that the queuing delay in the embodiments of the present disclosure includes a duration for the terminal to obtain a granted resource. The duration of the granted resource refers to a duration from when the terminal sends an SR or RACH until a first grant is obtained.

For example, in a case that the queuing delay for the data packet transmission is 40 milliseconds and the preset duration is 30 milliseconds, it is determined that the queuing delay of data packet transmission is greater than the preset duration, the terminal determines that the network is in the congestion state. However, in a case that the queuing delay for the data packet transmission is 20 milliseconds and the preset duration is 30 milliseconds, and it is determined that the queuing delay of data packet transmission is less than the preset duration, the terminal determines that the network is not in a congestion state.

It should be noted that in embodiments of the present disclosure, the queuing delay for the data packet transmission is the aforementioned measurement result of the PDCP layer, and the preset duration is the aforementioned predetermined measurement result.

Optionally, the terminal includes more than one data packet for transmission. The terminal obtains an average queuing delay for transmission of the more than one data packet, and determines whether the measurement result of the PDCP layer reaches the predetermined measurement result based on whether the average queuing delay reaches the preset duration.

It should be noted that in embodiments of the present disclosure, the average queuing delay is the aforementioned measurement result of the PDCP layer, and the preset duration is the aforementioned predetermined measurement result.

In another embodiment, in a case that a ratio of the number of target data packets to the total number of the one or more data packets reaches a preset ratio, it is determined that the measurement result of the PDCP layer reaches the predetermined measurement result, in which the target data packet is a data packet whose queuing delay reaches a preset duration.

The preset ratio is agreed upon by a communication protocol, or configured by a network device, or configured by other means, which is not limited in the embodiments of the present disclosure.

In these embodiments of the present disclosure, the terminal may count the total number of data packets to be transmitted, as well as a first number of data packets whose queuing delay reaches the preset duration. The terminal calculates a ratio of the first number to the total number. In a case of determining that the ratio is greater than the preset ratio, it indicates that the measurement result of the PDCP layer reaches the predetermined measurement result. In a case of determining that the ratio is less than the preset ratio, it indicates that the measurement result of the PDCP layer does not reach the predetermined measurement result.

It should be noted that in embodiments of the present disclosure, the ratio of the number of the target data packets to the total number of the one or more data packets is the aforementioned measurement result of the PDCP layer, and the preset ratio is the aforementioned predetermined measurement result.

It should be noted that this embodiment of the present disclosure is explained in which the data packet corresponding to the target priority is discarded based on the priorities of one or more data packets in a case of the terminal determining that the network is in the congestion state. In another embodiment, in a case of the terminal determining that the network is not in the congestion state, the terminal does not need to discard the data packet corresponding to the target priority based on the priorities of one or more data packets.

It should be noted that, in embodiments of the present disclosure, the network device may also send indication information to the terminal. The indication information is used to instruct the terminal to discard a data packet of a DRB based on priorities of one or more data packets of the DRB. After the terminal receives the indication information, the terminal may determine whether the network is congested per DRB, and then determine whether to discard the data packet based on the priorities of one or more data packets. Alternatively, in a case that the terminal configures the PDCP measurement based on the DRB or the data packet set, then the terminal determines that it can execute the technical solution of determining whether the network is congested, and then determining whether to discard the data packet based on the priorities of the one or more data packets.

In some embodiments, each data packet corresponds to a timer, and a duration of the timer is positively correlated with a priority of the data packet. In a case of determining that a first timer expires, the terminal discards a data packet corresponding to the first timer.

The duration of the timer is positively correlated with the priority of the data packet. That is, the higher the priority of the data packet, the longer the duration of the corresponding timer. In these embodiments of the present disclosure, in a case that the first timer expires, it indicates that a timer corresponding to a data packet with a lower priority expires first, meaning that the terminal discards the data packet with the lower priority.

Optionally, all data packets in a data packet set to which the data packet corresponding to the first timer belongs are discarded in a case of determining that the first timer expires.

When discarding all data packets in a data packet set to which the data packet corresponding to the first timer belongs in a case of determining that the first timer expires, all data packets in the data packet set to which the data packet corresponding to the first timer belongs may be discard based on that the first timer corresponding to any one of the data packets from the data packet set expires, or all data packets in the data packet set to which the data packet corresponding to the first timer belongs may be discard based on that the first timer corresponding to more than one data packet whose number exceeds the threshold proportion in the data packet set expires. For the former case, that is, in the data packet set, in a case that the first timer corresponding to any one of the data packets expires, all the data packets in the data packet set are discarded. For the latter case, that is, in the data packet set, only in a case that the first timer corresponding to more than one data packet whose number exceeds the threshold proportion expires, all the data packets in the data packet set are discarded.

In a case that the terminal determines that the first timer expires, the terminal not only discards the data packet corresponding to the first timer, but also determines the data packet set to which the data packet belongs and discards all the data packets in the data packet set.

Optionally, in the terminal, each data packet corresponds to a timer. The data packet set includes more than one data packet, and the timer duration of each data packet may be the same or different. However, since more than one data packet within the same data packet set has influence to each other, in a case that the timer of any data packet expires, the terminal will discard the data packet, and other data packets within the same data packet set will also be affected. Therefore, the terminal will synchronously discard other data packets belonging to the same data packet set.

In some embodiments, the terminal configures a timer corresponding to a timing duration for the data packet based on the priority of the data packet. For example, the priorities of the data packets include priority 1 and priority 2. This means that the terminal has two types of data packets, in which the timer duration for the data packet with priority 1 is duration 1, and the timer duration for the data packet with priority 2 is duration 2. Moreover, duration 1 is not less than duration 2.

Optionally, the terminal discards all data packets in the data packet set corresponding to the first timer in a case of determining that the first timer expires.

In embodiments of the present disclosure, each data packet set corresponds to a timer, which may also be understood as the timer durations for the data packets belonging to the same data packet set being the same. Therefore, the terminal discards all data packets in the data packet set corresponding to the first timer in a case of determining that the first timer expires.

In some embodiments, the terminal configures a timer corresponding to a timing duration for the data packet set based on the priority of the data packet set. For example, the priorities of the data packet sets include priority 1 and priority 2. This means that the terminal has two types of data packet sets, in which the timer duration for the data packet set with priority 1 is duration 1, and the timer duration for the data packet set with priority 2 is duration 2. Moreover, duration 1 is not less than duration 2.

It should be noted that, in embodiments of the present disclosure, the data packets are configured with different timers, then it is determined that the solution may be implemented where it is determined, depending on whether the timers are expired, whether the data packets are discarded based on their priorities.

In some embodiments, the network device sends a configuration signaling to the terminal, to execute the solution for a specific DRB, that is, the configuration signaling is used to configure different timer durations for different data packet attributes in the terminal. In this case, if the terminal determines that different data packets are configured with different timer attributes, it determines to execute the solution of determining, based on whether the timer expires, whether to discard the data packet according to the priorities of the one or more data packets.

It should be noted that the above mentioned embodiments may be further divided into new embodiments, or combined with other embodiments to form new embodiments. The present disclosure does not limit the combinations of the embodiments.

For instance, the solution of determining by the terminal whether the network is congested and the solution of determining whether the timer expires may be combined with each other to determine whether to discard the data packet corresponding to the target priority.

In some embodiments, in a case that the terminal determines that the network is not congested, it does not need to execute the solution of configuring different timer durations for different data packet attributes to discard packet(s). That is, there is no need to configure different timer durations for different data packet attributes.

In other embodiments, in a case that the terminal determines that the network is congested, different timer durations are configured for different data packet attributes. In a case that the timer expires, the data packet corresponding to the expired timer is discarded. Furthermore, in a case that the terminal detects that the network is not congested, it no longer setting different timer durations for different data packet attributes, but using a unified timer for packet discarding.

FIG. 5 illustrates a block diagram of an apparatus for discarding a data packet provided in an embodiment of the present disclosure. As shown in FIG. 5, the apparatus includes a processing module 501.

The processing module 501 is configured to discard a data packet corresponding to a target priority based on priorities of one or more data packets.

In some embodiments, the processing module 501 is configured to discard the data packet corresponding to the target priority based on the priorities of the one or more data packets in a case of determining that a network is in a congestion state.

In some embodiments, the target priority is a preset priority; or the target priority is a lowest priority among a plurality of data packets.

In some embodiments, as shown in FIG. 6, the apparatus further includes an obtaining module 502.

The obtaining module 502 is configured to obtain a measurement result of a packet data convergence protocol (PDCP) layer.

The processing module 501 is further configured to determine that the network is in the congestion state in a case of determining that the measurement result of the PDCP layer reaches a predetermined measurement result.

In some embodiments, the measurement result of the PDCP layer is measured based on at least one data packet from each data packet set, in which the data packet set includes the at least one data packet; or the measurement result of the PDCP layer is measured based on at least one data packet of each data radio bearer (DRB), in which each DRB includes at least one data packet set.

In some embodiments, the processing module 501 is further configured to:
in a case that a queuing delay of data packet transmission reaches a preset duration, determine that the measurement result of the PDCP layer reaches the predetermined measurement result;
   or
in a case that a ratio of the number of target data packets to the total number of the one or more data packets reaches a preset ratio, determine that the measurement result of the PDCP layer reaches the predetermined measurement result, in which the target data packet is a data packet whose queuing delay reaches a preset duration.

In some embodiments, each data packet corresponds to a timer, and a duration of the timer is positively correlated with a priority of the data packet. The processing module is configured to discard a data packet corresponding to the first timer in a case of determining that a first timer expires.

In some embodiments, the first timer corresponds to the data packet, the processing module 301 is configured to discard all data packets in a data packet set to which the data packet corresponding to the first timer belongs in a case of determining that the first timer expires.

In some embodiments, the first timer corresponds to a data packet set, the processing module 301 is configured to discard all data packets in the data packet set corresponding to the first timer in a case of determining that the first timer expires.

In some embodiments, as shown in FIG. 6, the apparatus further includes a configuration module 503.

The configuration module 503 is configured to configure a timer corresponding to a timing duration for the data packet based on the priority of the data packet.

In some embodiments, as shown in FIG. 6, the apparatus further includes a receiving module 504.

The receiving module 504 is configured to receive indication information, in which the indication information is used to instruct the terminal to perform discarding based on a priority of at least one data packet of a DRB.

In some embodiments, the data packet is a protocol data unit (PDU) data packet, or the data packet is a service data unit (SDU) data packet.

It should be noted that the apparatus provided by the above mentioned embodiments is only illustrated by the above division of the functional modules when performing functions. In actual applications, the above functions may be assigned to different functional modules as needed, that is, the internal structure of the apparatus may be divided into different functional modules to complete all or part of the functions described above. In addition, the apparatus provided by the above mentioned embodiments and the method embodiments belong to the same concept, and the specific implementation processes may be found in the method embodiments, which will not be repeated here.

FIG. 7 illustrates a structural diagram of a communication device provided in an embodiment of the present disclosure. The communication device includes: a processor 701, a receiver 702, a transmitter 703, a memory 704 and a bus 707.

The processor 701 includes one or more processing cores. The processor 701 executes various functional applications and information processing by running software programs and modules.

The receiver 702 and the transmitter 703 may be implemented as a single communication component, which may be a communication chip.

The memory 704 is connected to the processor 701 via the bus 707.

The memory 704 may be used to store at least one program code, and the processor 701 is used to execute the at least one program code to achieve each step of the above mentioned method embodiments.

In addition, the communication equipment may be either a terminal or a network device. The memory 704 may be implemented by any type of volatile or non-volatile storage device or a combination of them. The volatile or non-volatile storage devices include, but are not limited to: a disk or an optical disc, an electrically erasable programmable read-only memory (EEPROM), an erasable programmable read-only memory (EPROM), a static random access memory (SRAM), a read-only memory (ROM), a magnetic storage, a flash memory, and a programmable read-only memory (PROM).

In an embodiment, a computer-readable storage medium is also provided. An executable program code is stored on the computer-readable storage medium, and the executable program code is loaded and executed by a processor, to implement the method for discarding a data packet provided by the above-mentioned various method embodiments and executed by the communication device.

In an embodiment, a chip is provided. The chip includes a programmable logic circuit and/or program instructions. When the chip is running on a terminal or a network device, it is used to implement the method for discarding a data packet as provided in each of the method embodiments.

In an embodiment, a communication system is provided. The communication system includes a terminal and a network device. The terminal is used to implement the method for discarding a data packet as described above, and the network device is used to implement the method for discarding a data packet as described above.

In an embodiment, a computer program product is provided. When the computer program product is executed by a processor of a terminal or network device, the method for discarding a data packet provided by each of the above-mentioned method embodiments is implemented.

A person skilled in the art may understand that all or part of the steps for implementing the above embodiments may be accomplished by hardware, or by instructions from a program that activates the relevant hardware. The mentioned program may be stored in a computer-readable storage medium. The aforementioned storage medium may be a read-only memory, a disk, or a CD, etc.

The above-mentioned are merely optional embodiments of this application and do not limit this application. Any modifications, equivalents, substitutions, improvements, etc. within the spirit and principles of this application shall be included within the protection scope of this application.

## Claims

1. A method for discarding a data packet, performed by a terminal, comprising:
discarding a data packet corresponding to a target priority based on priorities of one or more data packets.

2. The method according to claim 1, wherein discarding the data packet corresponding to the target priority based on the priorities of the one or more data packets comprises:
determining that a network is in a congestion state, discarding the data packet corresponding to the target priority based on the priorities of the one or more data packets.

3. The method according to claim 2, wherein the target priority is a preset priority; or the target priority is a lowest priority among priorities of a plurality of data packets.

4. The method according to claim 2, further comprising:
obtaining a measurement result of a packet data convergence protocol (PDCP) layer;
determining that the measurement result of the PDCP layer reaches a predetermined measurement result, determining that the network is in the congestion state.

5. The method according to claim 4, wherein the measurement result of the PDCP layer is measured based on at least one data packet from each data packet set, wherein the data packet set comprises the at least one data packet; or the measurement result of the PDCP layer is measured based on at least one data packet of each data radio bearer (DRB), wherein each DRB comprises at least one data packet set.

6. The method according to claim 4, further comprising:
in a case that a queuing delay of data packet transmission reaches a preset duration, determining that the measurement result of the PDCP layer reaches the predetermined measurement result;
or
in a case that a ratio of the number of target data packets to the total number of the one or more data packets reaches a preset ratio, determining that the measurement result of the PDCP layer reaches the predetermined measurement result, wherein the target data packet is a data packet whose queuing delay reaches a preset duration.

7. The method according to claim 1, wherein each data packet corresponds to a timer, and a duration of the timer is positively correlated with a priority of the data packet; wherein discarding the data packet corresponding to the target priority based on the priorities of the one or more data packets comprises:
determining that a first timer expires, discarding a data packet corresponding to the first timer.

8. The method according to claim 7, wherein the first timer corresponds to the data packet, and determining that the first timer expires, discarding the data packet corresponding to the first timer comprises:
determining that the first timer expires, discarding all data packets in a data packet set to which the data packet corresponding to the first timer belongs.

9. The method according to claim 7, wherein the first timer corresponds to a data packet set, and determining that the first timer expires, discarding the data packet corresponding to the first timer comprises:
determining that the first timer expires, discarding all data packets in the data packet set corresponding to the first timer.

10. The method according to any one of claims 7 to 9, further comprising:
configuring a timer corresponding to a timing duration for the data packet based on the priority of the data packet.

11. The method according to any one of claims 1 to 10, further comprising:
receiving indication information, wherein the indication information is used to instruct the terminal to perform discarding based on a priority of at least one data packet of a data radio bearer (DRB).

12. The method according to any one of claims 1 to 11, wherein the data packet is a protocol data unit (PDU) data packet, or the data packet is a service data unit (SDU) data packet.

13. An apparatus for discarding a data packet, comprising:
a processing module, configured to discard a data packet corresponding to a target priority based on priorities of one or more data packets.

14. A terminal, comprising:
a processor;
a transceiver connected to the processor;
wherein the processor is configured to load and execute executable instructions to implement the method for discarding a data packet as claimed in any one of claims 1 to 12.

15. A computer-readable storage medium, wherein an executable program code is stored on the computer-readable storage medium, and when the executable program code is loaded and executed by a processor, the method for discarding data packet as claimed in any one of claims 1 to 12 is implemented.
